# FASCICULE DE BREVET EUROPEEN

(11) **EP 1 915 567 B1**
(45) Date de publication et mention de la délivrance du brevet: **25.02.2009**
(21) Numéro de dépôt: 06794489.2
(22) Date de dépôt: 20.07.2006
(51) Int. Cl.: F17C 5/00, F17C 5/06, F17C 13/02

(54) **PROCEDE DE REMPLISSAGE D'UN RESERVOIR DE GAZ SOUS PRESSION**
VERFAHREN ZUM FÜLLEN EINES DRUCKGASTANKS
METHOD FOR FILLING A PRESSURISED GAS TANK

(30) Priorité: 11.08.2005 FR 0552500
(43) Date de publication de la demande: 30.04.2008
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: THONNELIER, Jean-Yves, F-78960 Voisins Le Bretonneux (FR)
(74) Mandataire: De Cuenca, Emmanuel Jaime
(86) Numéro de dépôt international: PCT/FR2006/050735
(87) Numéro de publication internationale: WO 2007/017604

(56) Documents cités:
- EP-B- 0 034 098
- WO-A-20/05043033
- WO-A-20/05059431
- DE-A1- 10 107 895
- FR-A- 2 750 689

## Description

La présente invention concerne un procédé de remplissage d'un réservoir de gaz sous pression.

L'invention concerne plus particulièrement un procédé de remplissage d'un réservoir de gaz sous pression, en particulier un réservoir sous pression pour un système de protection du type à sac gonflable, avec un gaz ou un mélange gazeux comportant une première étape d'introduction d'une première quantité déterminée de gaz ou mélange gazeux à l'état liquide dans le réservoir.

Selon ce procédé de remplissage, un ou plusieurs gaz sont introduits à l'état liquide cryogénique dans le réservoir. Après l'introduction du gaz à l'état liquide puis éventuellement l'introduction d'un gaz supplémentaire à l'état gazeux, le réservoir est ensuite refermé et réchauffé (le réchauffage peut être réalisé par un chauffage actif ou par l'arrêt de son refroidissement en le laissant à la température ambiante). De cette façon, le gaz ou mélange gazeux se vaporise dans le réservoir et génère ainsi une pression élevée, par exemple 500 bar, 700 ou au-delà.

Un tel procédé est décrit notamment dans le document WO 2005/59431.

EP 0034098 décrit un procédé de remplissage d'un réservoir de gaz sous pression.

Dans un tel procédé, il est très important de maîtriser le dosage précis de la quantité de gaz à l'état liquide introduit dans le réservoir. En effet, ce dosage détermine les caractéristiques de fonctionnement du réservoir rempli et notamment la pression du gaz qu'il renferme lorsqu'il est à température ambiante.

Une solution connue pour réaliser ce dosage consiste à mesurer précisément la quantité de gaz qui est introduite dans le réservoir, par exemple par des moyens manométriques ou de détection de débit. Une autre solution consiste à mesurer précisément le volume de liquide introduit en utilisant un réservoir tampon entre la source de liquide et le réservoir à remplir. Le réservoir tampon a des caractéristiques de volume qui permettent de contrôler le volume de gaz délivré au réservoir à remplir.

Cependant, ces méthodes sont relativement complexes, coûteuses et difficiles à mettre en oeuvre industriellement à grande échelle, notamment à des cadences élevées.

Par ailleurs, dans le cas où le réservoir n'est pas refermé aussitôt après l'introduction de gaz à l'état liquide et qu'il doit subir une opération supplémentaire (par exemple l'introduction d'un gaz ou mélange gazeux supplémentaire), il y a un risque qu'une partie du gaz liquéfié s'évapore et s'échappe du réservoir. Ces éventuelles fuites peuvent se produire également lorsque le réservoir est amené vers une machine de soudage destinée le refermer hermétiquement. Ces dispersions ainsi créées modifient les caractéristiques du réservoir final.

Un but de la présente invention est de pallier tout ou partie des inconvénients de l'art antérieur relevés ci-dessus.

A cette fin, le procédé de remplissage d'un réservoir de gaz sous pression selon l'invention, par ailleurs conforme à la définition générique qu'en donne le préambule ci-dessus, est essentiellement caractérisé en ce que la première étape d'introduction comprend une étape d'introduction intermédiaire d'une quantité intermédiaire de gaz ou mélange gazeux à l'état liquide dans le réservoir, la quantité intermédiaire étant supérieure à la première quantité, et une étape de retrait d'une partie du gaz à l'état liquide du réservoir en excès à la première quantité, de façon à doser la première quantité de gaz à l'état liquide dans le réservoir.

Par ailleurs, l'invention peut comporter l'une ou plusieurs des caractéristiques suivantes :
- le réservoir est refroidi avant et/ou pendant au moins l'étape d'introduction intermédiaire,
- la quantité intermédiaire correspond sensiblement au remplissage total du réservoir,
- l'étape d'introduction intermédiaire comprend une opération d'écoulement du gaz ou du mélange gazeux à l'état liquide depuis une source vers l'intérieur du réservoir via un orifice du réservoir,
- l'étape d'introduction intermédiaire comprend une étape d'immersion du réservoir dans un bain constitué du gaz ou du mélange gazeux à l'état liquide destiné à remplir le réservoir, de façon permettre l'écoulement du liquide du bain vers l'intérieur du réservoir,
- l'étape de retrait comprend une opération de détermination du niveau de liquide dans le réservoir correspondant à la quantité déterminée,
- l'étape de retrait comprend une opération d'aspiration du gaz à l'état liquide à l'intérieur du réservoir,
- le gaz à l'état liquide introduit dans le réservoir lors de la première étape d'introduction comprend de l'Argon,
- le procédé comporte une seconde étape d'introduction d'une seconde quantité déterminée d'un gaz ou mélange gazeux supplémentaire à l'état gazeux dans le réservoir,
- le gaz ou mélange gazeux supplémentaire introduit à l'état gazeux dans le réservoir lors de la seconde étape d'introduction comprend de l'Hélium.

D'autres particularités et avantages apparaîtront à la lecture de la description ci-après, faite en référence aux figures dans lesquelles :
- la figure 1 représente une vue de côté et schématique illustrant la structure et le fonctionnement d'un exemple de réalisation d'une étape d'introduction du procédé de remplissage selon l'invention,
- la figure 2 représente une vue schématique illustrant la structure et le fonctionnement d'un exemple de réalisation d'un système d'aspiration apte à être utilisé lors d'une étape de retrait du procédé de remplissage selon l'invention,
- la figure 3 représente une vue de côté et schématique illustrant la structure et le fonctionnement d'un exemple de réalisation d'une étape de retrait du procédé de remplissage selon l'invention,
- la figure 4 représente une vue en perspective et schématique illustrant la structure et le fonctionnement d'un exemple de réalisation du procédé de remplissage selon l'invention appliqué à une pluralité de réservoirs,
- la figure 5 représente schématiquement en vue de dessus, la structure et le fonctionnement d'un exemple de réalisation d'un poste de refroidissement de réservoirs selon l'invention,
- la figure 6 représente une vue de côté du poste de refroidissement de la figure 5,
- la figure 7 représente schématiquement en vue de côté, la structure et le fonctionnement d'un exemple de réalisation d'un poste de manipulation de réservoirs de mise en oeuvre du procédé selon l'invention.

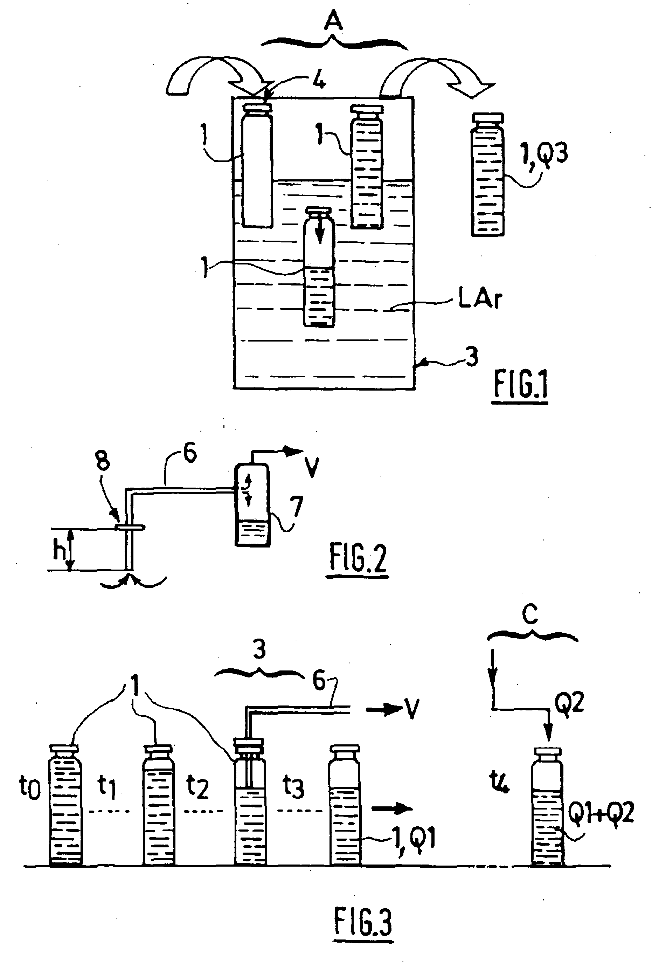

Un exemple de remplissage d'un réservoir 1 avec un mélange gazeux Argon/Hélium va à présent être décrit en référence aux figures 1 à 3. Dans cet exemple, une première quantité Q1 d'Argon est d'abord introduite à l'état liquide, une seconde quantité Q2 d'Hélium étant introduite ultérieurement à l'état gazeux.

Pour introduire une première quantité Q1 déterminée d'Argon liquide dans le réservoir 1, une première étape A (figure 1) peut consister à introduire dans le réservoir. 1 une quantité Q3 d'Argon liquide qui est supérieure à la première quantité Q1. Dans une seconde étape B (figure 3), l'Argon liquide du réservoir 1 qui est en excès par rapport à la première quantité Q1 est retiré du réservoir 1.

La première étape A peut consister à immerger le réservoir 1, par exemple complètement, dans un bain 3 d'Argon cryogénique liquéfié (LAr, température de -186°C ou inférieure). C'est à dire-que le réservoir 1 vide est ouvert au niveau d'au moins un orifice 4 et est plongé dans le bain 3 d'Argon liquide de façon que l'Argon pénètre dans son volume intérieur. De préférence, le réservoir 1 peut être complètement rempli d'Argon liquide.

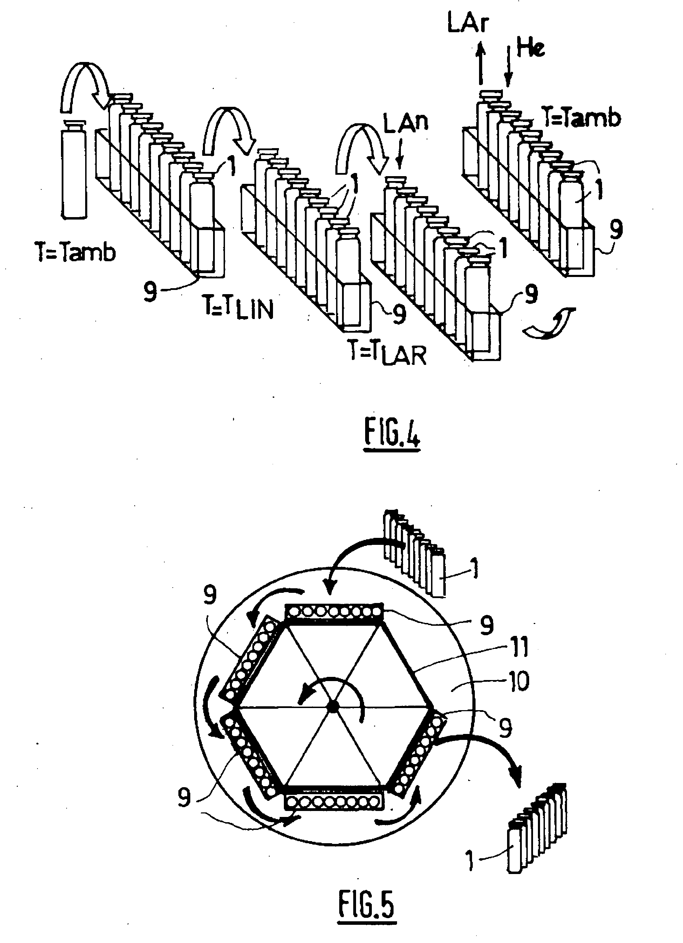

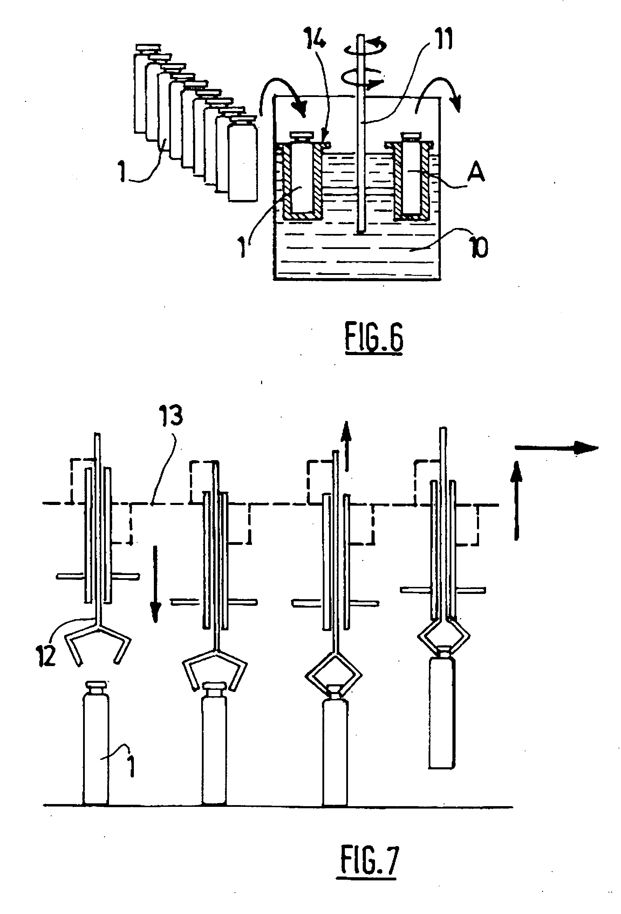

Avantageusement, le réservoir 1 peut être pré-refroidi avant d'être plongé dans le bain 3 d'Argon liquide. Par exemple, et comme décrit plus en détail ci-après en référence aux figures 4 à 6, le réservoir 1 peut être pré-refroidi à une température inférieure à la température du bain 3 d'Argon. Par exemple, le réservoir 1 est immergé partiellement dans un bain 5 d'azote liquide à une température de -196°C ou inférieure. L'immersion est de préférence conformée pour empêcher l'entrée d'azote liquide à l'intérieur des réservoirs 1 (en contrôlant notamment le niveau d'immersion et/ou avec des moyens de protection contre des projections d'azote). Des moyens de protection 14 tels que des déflecteurs ou des écrans peuvent notamment être prévus sur le cadre 11 qui maintient les réservoirs 1 dans le bain 10. Les moyens de protection 14 peuvent former un écran entre la surface du bain 10 et l'entrée des réservoirs 1 (figure 6).

En variante ou en combinaison, il est possible d'envisager que le bain 3 d'Argon liquide soit maintenu à une température inférieure à la température d'ébullition de l'Argon liquide (inférieure à -186°C). Par exemple, le bain 3 d'Argon liquide peut être refroidi par un second bain extérieur plus froid (azote liquide par exemple).

Après son remplissage dans le bain 3 d'Argon (quantité Q3), le réservoir 1 est retiré du bain 3 d'Argon et peut faire l'objet d'autres manipulations/opérations ou être mis en attente à la température ambiante (ou au moins à des températures plus chaudes que celles du bain 3). Ainsi, entre les instants to juste après la sortie du bain 3 et un instant t1 ultérieure, une quantité d'Argon liquide peut s'évaporer du volume intérieur du réservoir 1 (figure 3). Cette évaporation ne porte pas préjudice au dosage final des gaz dans le réservoir 1. En effet, du fait que le réservoir 1 contient une quantité Q3 d'Argon liquéfié qui est supérieure à la première quantité Q1 nécessaire, le réservoir 1 a ainsi une plus grande autonomie et une plus grande inertie thermique vis-à-vis des risques d'évaporation excessifs d'Argon hors de son volume. De cette façon, le réservoir 1 froid contenant de l'Argon liquide peut être utilisé avec plus de flexibilité dans un procédé plus global.

Après des manipulations et/ou un temps d'attente (entre to et t1, figure 3) et peu avant l'instant t4 d'introduction d'Hélium dans le réservoir 1, l'Argon liquide en excès à la première quantité Q1 est retiré du réservoir 1 (instant t2, figure 3). En effet, de préférence l'Argon liquide en excès à la première quantité Q1 est retiré du réservoir 1 peu avant la fermeture du réservoir 1. De cette façon le réservoir 1 clos contient précisément la première quantité Q1 d'Argon voulue.

Le retrait de l'Argon liquide en excès peut être réalisé, par exemple, en aspirant l'Argon liquide dans le réservoir 1. Par exemple, et comme représenté aux figures 2 et 3, une conduite 6 d'aspiration peut être prévue pour retirer l'excédent d'Argon liquide. La conduite 6 d'aspiration peut comporter une première extrémité reliée à des moyens de dépression ou de vide V, et une seconde extrémité destinée à plonger dans le réservoir 1 via son orifice. Entre ses deux extrémités, la conduite 6 d'aspiration peut comporter une capacité destinée à collecter l'Argon aspiré dans le réservoir 1 (en vue par exemple de son recyclage). Pour aspirer précisément la quantité d'Argon liquide en excès dans le réservoir 1 et pas davantage, la seconde extrémité de la conduite 6 d'aspiration peut comporter des moyens 8 de limitation d'aspiration permettant de limiter le niveau de liquide en dessous duquel le liquide n'est plus aspiré dans le réservoir 1. Par exemple, les moyens 8 de limitation d'aspiration coopèrent en butée avec l'extrémité du réservoir 1 (au niveau de l'orifice par exemple). Ces moyens 8 de limitation d'aspiration sont de préférence réglables en hauteur h pour permettre de régler précisément la quantité de liquide à conserver dans le réservoir 1. Ce réglage permet notamment d'adapter l'aspiration à différentes géométries/volumes de réservoirs 1 ainsi qu'à différentes quantités de liquide Q1.

Après aspiration (instant t3, figure 3), le réservoir 1 contient précisément la première quantité Q1 d'Argon voulue. Le réservoir 1 peut être amené à un poste de remplissage de gaz comprimé. Ainsi, lors d'une étape ultérieure, (instant t4, figure 3), une seconde quantité Q2 d'Hélium gazeux peut être introduite dans le réservoir 1. L'hélium gazeux est introduit par exemple à température ambiante à une pression entre 5 et 50 bar, et de préférence de l'ordre de 10 à 20 bar. Le réservoir 1 est ensuite rapidement refermé. De préférence, l'orifice du réservoir 1 est refermé au niveau du poste de remplissage d'Hélium. Le réservoir 1 refermé peut être réchauffé activement ou laissé à la température ambiante.

De préférence, les quantités Q1 d'Argon liquide et d'Hélium Q2 remplies dans le réservoir 1 sont choisies de façon à former un mélange gazeux dans le réservoir 1 à température ambiante (par exemple 15°C) avec les proportions suivantes en volume : Argon 97% et Hélium 3%.

Bien entendu, l'invention peut s'appliquer à tout autre type de gaz ou de mélange de gaz (Argon, Hélium, CO₂, N₂, N₂O, H₂, O₂...) avec toutes les proportions relatives possibles.

Pour réaliser le remplissage de réservoirs à échelle industrielle, toutes ou partie des étapes décrites ci-dessus sont de préférence réalisées simultanément et/ou successivement sur une pluralité de réservoirs 1. Par exemple un ensemble de huit à douze réservoirs 1 est disposé dans sur un support 9 commun (cf. figures 4 à 6). De cette façon, le nombre de manipulation et la durée du procédé de remplissage selon l'invention peuvent être réduits.

En se référant à présent à la figure 4, quatre étapes du procédé sont symbolisées pour un ensemble de neuf réservoirs 1 montés dans un même support 9. Les quatre étapes sont représentées chronologiquement de gauche à droite sur la figure 4. Dans une première étape les réservoirs 1 sont disposés dans un support 9 à la température ambiante (T=Tamb). Puis, le support 9 contenant les réservoirs 1 est immergé le bain de pré-refroidissement (température T= TLIN = température du bain d'azote liquide). Puis le support 9 contenant les réservoirs 1 est immergé le bain d'Argon liquide (température T = TLAR) et les réservoirs 1 y sont remplis d'Argon liquide. Enfin, lors de la quatrième étape, les réservoirs 1 sont sortis du bain d'Argon liquide (T = température ambiante Tamb), sont vidés d'une partie de leur Argon liquide puis remplis d'Hélium gazeux et enfin sont clos.

Les figures 5 et 6 illustrent un exemple de réalisation de l'étape de pré-refroidissement des réservoirs 1. Il est en effet possible de prévoir un pré-refroidissement simultané d'une pluralité de réservoirs 1 et en particulier, un pré-refroidissement simultané d'une pluralité de supports 9 de réservoirs 1. Comme représenté, le bain 10 de pré-refroidissement (azote liquide ou autre) peut comporter un cadre 11 immergé et mobile permettant d'accueillir plusieurs supports 9 de réservoir 1 à la fois. Si le cadre 11 est rotatif et peut accueillir six supports 9, il est possible d'immerger/retirer du bain les cadres de façon séquentielle et successive (chargement/déchargement à chaque rotation de 60 degrés).

Dans une telle configuration non limitative, les réservoirs 1 peuvent ainsi séjourner dans le bain 10 pendant une durée cinq fois supérieure à la durée d'un chargement/déchargement d'un support 9.

Selon une caractéristique avantageuse, les moyens de manipulation des réservoirs 1 sont conformés de façon que leurs éléments constitutifs sensibles aux basses températures (moteurs, articulations lubrifiées, pièces mécaniques mobiles en frottement, parties électriques...) soient relativement éloignés des réservoirs 1 et des bains 3, 10 cryogéniques. Par exemple, les moyens de manipulation et/ou de traitement des réservoirs 1 sont agencés selon deux niveaux de distance relativement aux parties à basses températures (réservoirs froids, bains cryogéniques). Ainsi, les éléments de manipulation/traitement sont disposés proches et/ou au contact des parties froides. Ces éléments de manipulation/traitement, tels que des bras manipulateurs 12, sont constitués de préférence d'acier inoxydable et/ou de matériaux faiblement conducteurs thermiques (figure 7) et peu sensibles aux basses températures cryogéniques.

Les éléments 13 sensibles aux basses températures sont quant à eux disposés à une distance plus importante des éléments froids, par exemple de l'ordre d'au moins 1,5 à 2m. A la figure 7, ces éléments 13 sensibles aux basses températures sont situées au-dessus des parties 12 peu sensibles aux basses températures et sont symbolisés par des lignes discontinues.

De cette façon, seules les pièces adaptées à résister aux températures cryogéniques sont exposées à ces basses températures. Les pièces 13 sensibles aux basses températures sont hors de portée des risques de refroidissement directs ou indirects provoqués par les parties froides.

Les éléments 12 de manipulation/traitement sont susceptibles d'accumuler du givre ou de la glace au contact des parties à basses températures. Avantageusement, il peut être prévu des zones de dégivrage entre les postes d'immersion dans les bains cryogéniques. Ces zones de dégivrage (non représentées) peuvent par exempte comporter des moyens de réchauffage des éléments 12 de manipulation/traitement, par exemple par soufflage.

On conçoit donc aisément que le procédé selon l'invention, tout en étant de structure simple, permet un remplissage efficace de réservoirs et adapté à une production à grande échelle, notamment à des cadences élevées.

L'invention s'applique de façon particulièrement avantageuse au remplissage des réservoirs ou cylindres de gaz sous pression pour des sacs gonflables (airbags). Bien entendu le procédé selon l'invention peut s'appliquer à toute autre application équivalente.

Par ailleurs, l'invention n'est pas limitée à l'exemple de réalisation décrit. Ainsi, l'étape de pré-refroidissement des réservoirs peut être réalisée par tout autre moyen équivalent (jet ou écoulement de liquide cryogénique contre les parois extérieures du réservoir par exemple).

De même, il est possible d'omettre cette étape de pré-refroidissement. Dans ce cas, le refroidissement du réservoir 1 est réalisé uniquement par le gaz à l'état liquide du bain 3 (refroidissement extérieur et intérieur par l'Argon liquide).

De plus, la première quantité Q1 de gaz introduite peut comporter du gaz à l'état solide (mélange liquide/solide). De même, la seconde quantité Q2 de gaz à l'état gazeux peut être refroidie préalablement à son introduction dans le réservoir 1. En variante, cette seconde quantité Q2 de gaz (facultative) peut être constituée ou comporter du gaz à l'état liquide et/ou solide.

En outre, l'étape A d'introduction intermédiaire d'une quantité Q3 de gaz à l'état liquide dans le réservoir 1 peut être réalisée par tout autre moyen connu équivalent. Par exemple il est possible d'acheminer l'Argon liquide dans le réservoir 1 via une conduite alimentée par une source d'Argon liquide.

## Revendications

1. Procédé de remplissage d'un réservoir (1) de gaz sous pression, en particulier un réservoir sous pression pour un système de protection du type à sac gonflable, avec un gaz ou un mélange gazeux, comportant une première étape d'introduction d'une première quantité (Q1) déterminée de gaz ou mélange gazeux à l'état liquide dans le réservoir (1), **caractérisé en ce que** la première étape d'introduction comprend :
- une étape (A) d'introduction intermédiaire d'une quantité intermédiaire (Q3) de gaz ou mélange gazeux à l'état liquide dans le réservoir (1), la quantité intermédiaire (Q3) étant supérieure à la première quantité (Q1), et
- une étape (B) de retrait d'une partie du gaz à l'état liquide du réservoir (1) en excès à la première quantité (Q1), de façon à doser la première quantité (Q1) de gaz à l'état liquide dans le réservoir (1).

2. Procédé selon la revendication 1, **caractérisé en ce que** le réservoir (1) est refroidi avant et/ou pendant au moins l'étape (A) d'introduction intermédiaire.

3. Procédé selon la revendication 1 ou 2, **caractérisé en ce que** la quantité intermédiaire (Q3) correspond sensiblement au remplissage total du réservoir (1).

4. Procédé selon l'une quelconque des revendications précédentes, **caractérisé en ce que** l'étape (A) d'introduction intermédiaire comprend une opération d'écoulement du gaz ou du mélange gazeux à l'état liquide depuis une source vers l'intérieur du réservoir (1) via un orifice du réservoir (1).

5. Procédé selon l'une quelconque des revendications précédentes, **caractérisé en ce que** l'étape (A) d'introduction intermédiaire comprend une étape d'immersion du réservoir (1) dans un bain constitué du gaz ou du mélange gazeux à l'état liquide destiné à remplir le réservoir (1), de façon permettre l'écoulement du liquide du bain vers l'intérieur du réservoir (1).

6. Procédé selon l'une quelconque des revendications précédentes, **caractérisé en ce que** l'étape (B) de retrait comprend une opération de détermination du niveau de liquide dans le réservoir (1) correspondant à la quantité (Q1) déterminée.

7. Procédé selon l'une quelconque des revendications précédentes, **caractérisé en ce que** l'étape (B) de retrait comprend une opération d'aspiration du gaz à l'état liquide à l'intérieur du réservoir (1).

8. Procédé selon l'une quelconque des revendications précédentes, **caractérisé en ce que** le gaz à l'état liquide introduit dans le réservoir (1) lors de la première étape d'introduction comprend de l'Argon.

9. Procédé selon l'une quelconque des revendications précédentes, **caractérisé en ce qu'**il comporte une seconde étape (C) d'introduction d'une seconde quantité (Q2) déterminée d'un gaz ou mélange gazeux supplémentaire à l'état gazeux dans le réservoir (1).

10. Procédé selon la revendication 9, **caractérisé en ce que** le gaz ou mélange gazeux supplémentaire introduit à l'état gazeux dans le réservoir (1) lors de la seconde étape (C) d'introduction comprend de l'Hélium.

## Claims

1. Method for filling a pressurized gas reservoir (1), in particular a pressurized reservoir for a protection system of the airbag type, with a gas or a gas mixture, comprising a first step of introduction of a first fixed quantity (Q1) of gas or gas mixture in the liquid state into the reservoir (1), **characterized in that** the first introduction step comprises:
- a step (A) of intermediate introduction of an intermediate quantity (Q3) of gas or gas mixture in the liquid state in the reservoir (1), the intermediate quantity (Q3) being higher than the first quantity (Q1), and
- a step (B) of withdrawal of a part of the gas in the liquid state from the reservoir (1) in excess of the first quantity (Q1), in order to batch the first quantity (Q1) of gas in the liquid state in the reservoir (1).

2. Method according to Claim 1, **characterized in that** the reservoir (1) is cooled before and/or during at least the intermediate introduction step (A).

3. Method according to either of Claims 1 and 2, **characterized in that** the intermediate quantity (Q3) corresponds substantially to the total filling of the reservoir (1).

4. Method according to any one of the preceding claims, **characterized in that** the intermediate introduction step (A) comprises an operation of flow of the gas or of the gas mixture in the liquid state from a source to the interior of the reservoir (1) via an orifice of the reservoir (1).

5. Method according to any one of the preceding claims, **characterized in that** the intermediate introduction step (A) comprises a step of immersion of the reservoir (1) in a bath consisting of the gas or the gas mixture in the liquid state intended for filling the reservoir (1), in order to permit the flow of the liquid from the bath to the interior of the reservoir (1).

6. Method according to any one of the preceding claims, **characterized in that** the withdrawal step (B) comprises an operation of determination of the liquid level in the reservoir (1) corresponding to the fixed quantity (Q1).

7. Method according to any one of the preceding claims, **characterized in that** the withdrawal step (B) comprises an operation of suction of the gas in the liquid state inside the reservoir (1).

8. Method according to any one of the preceding claims, **characterized in that** the gas in the liquid state introduced into the reservoir (1) during the first introduction step comprises argon.

9. Method according to any one of the preceding claims, **characterized in that** it comprises a second step (C) of introduction of an additional second fixed quantity (Q2) of a gas or gas mixture in the liquid state into the reservoir (1).

10. Method according to Claim 9, **characterized in that** the additional gas or gas mixture introduced in the gas state into the reservoir (1) during the second introduction step (C) comprises helium.

## Patentansprüche

1. Verfahren zum Füllen eines Druckgastanks (1), insbesondere eines Tanks unter Druck für ein Schutzsystem des Typs Airbag, mit einem Gas oder einem Gasgemisch, das einen ersten Schritt des Einführens einer bestimmten ersten Menge (Q1) von Gas oder Gasgemisch in flüssigem Zustand in den Tank (1) aufweist, **dadurch gekennzeichnet, dass** der erste Einführungsschritt Folgendes aufweist:
- einen Zwischeneinführungsschritt (A) einer Zwischenmenge (Q3) von Gas oder Gasgemisch in flüssigem Zustand in den Tank (1), wobei die Zwischenmenge (Q3) größer ist als die erste. Menge (Q1), und
- einen Schritt (B) des Entnehmens eines Teils des Gases in flüssigem Zustand aus dem Tank (1), der hinsichtlich der ersten Menge (Q1) überschüssig ist, derart, dass die erste Menge (Q1) von Gas in flüssigem Zustand in dem Tank (1) dosiert wird.

2. Verfahren nach Anspruch 1, **dadurch gekennzeichnet, dass** der Tank (1) vor und/oder während mindestens des Schritts (A) des Zwischeneinführens gekühlt wird.

3. Verfahren nach Anspruch 1 oder 2, **dadurch gekennzeichnet, dass** die Zwischenmenge (Q3) im Wesentlichen dem kompletten Füllen des Tanks (1) entspricht.

4. Verfahren nach einem der vorhergehenden Ansprüche, **dadurch gekennzeichnet, dass** der Zwischeneinführschritt (A) einen Fließvorgang des Gases oder Gasgemischs im flüssigen Zustand von einer Quelle in das Innere des Tanks (1) über eine Öffnung des Tanks (1) aufweist.

5. Verfahren nach einem der vorhergehenden Ansprüche, **dadurch gekennzeichnet, dass** der Schritt (A) des Zwischeneinführens einen Eintauchschritt des Tanks (1) in ein Bad bestehend aus Gas oder Gasgemisch im flüssigen Zustand aufweist, der dazu bestimmt ist, den Tank (1) zu füllen, um das Fließen der Flüssigkeit des Bads zum Inneren des Tanks (1) zu erlauben.

6. Verfahren nach einem der vorhergehenden Ansprüche, **dadurch gekennzeichnet, dass** der Schritt (B) des Entnehmens einen Vorgang des Bestimmens des Flüssigkeitsfüllstands in dem Tank (1), der der bestimmten Menge (Q1) entspricht, aufweist.

7. Verfahren nach einem der vorhergehenden Ansprüche, **dadurch gekennzeichnet, dass** der Schritt (B) des Entnehmens einen Ansaugvorgang des Gases im flüssigen Zustand in das Innere des Tanks (1) aufweist.

8. Verfahren nach einem der vorhergehenden Ansprüche, **dadurch gekennzeichnet, dass** das Gas im flüssigen Zustand, das in den Tank (1) beim ersten Einführschritt eingeführt wird, Argon enthält.

9. Verfahren nach einem der vorhergehenden Ansprüche, **dadurch gekennzeichnet, dass** es einen zweiten Schritt (C) zum Einführen einer bestimmten zweiten Menge (Q2) eines zusätzlichen Gases oder Gasgemischs im gasförmigen Zustand in dem Tank (1) aufweist.

10. Verfahren nach Anspruch 9, **dadurch gekennzeichnet, dass** das zusätzliche Gas oder Gasgemisch, das im gasförmigen Zustand in den Tank (1) bei dem zweiten Einführschritt (C) eingeführt wird, Helium aufweist.
